# EUROPEAN PATENT APPLICATION

(11) **EP 3 570 158 A1**
(43) Date of publication of application: **20.11.2019**
(21) Application number: 18172515.1
(22) Date of filing: 15.05.2018
(51) Int. Cl.: G06F 3/16

(54) **OPERATING GUIDE SYSTEM FOR AN APPLIANCE**

(71) Applicant: ELECTROLUX APPLIANCES AKTIEBOLAG, 105 45 Stockholm (SE)
(72) Inventor: DENG, Kun, Hangzhou, Zheijiang 310000 (CN); Constantin, KRAUßE, 91541 Rothenburg (DE)
(74) Representative: Electrolux Group Patents

(57) **Abstract**

The present invention relates to an operating guide system for an appliance (10), in particular for a domestic appliance, preferably for a kitchen appliance. The operating guide system comprises at least one user interface (12) for a bidirectional communication with a user (22). The user interface (12) is a separate device or an integrated part of the appliance (10). The user interface (12) includes at least one output device (14) and at least one input device (16). The output device (14) includes at least one voice output device for addressing the user (22). The input device (14) includes at least one voice input device for receiving the voice of the user (22).

## Description

The present invention relates to an operating guide system for an appliance. In particular, the present invention relates to an operating guide system for a domestic appliance, preferably a kitchen appliance. Further, present invention relates to a method for communicating an operating guide for an appliance.

Conventional operating guides are often limited on single and specific appliances only, but not on groups of appliances. Further, the operating guides are usually voluminous and not suitable for an easy explanation of only simple and specific features of the appliance. Known operating guides often comprise a plethora of descriptions of features independent of said feature is really implemented in the particular appliance.

It is an object of the present invention to provide an operating guide system for an appliance, which is adapted to the specific appliance and allows a proper first time use.

The object is achieved by the operating guide system for an appliance according to claim 1.

According to the present invention an operating guide system for an appliance, in particular for a domestic appliance, preferably for a kitchen appliance, is provided, wherein:
- the operating guide system comprises at least one user interface for a bidirectional communication with a user,
- the user interface is a separate device or an integrated part of the appliance,
- the user interface includes at least one output device and at least one input device,
- the output device includes at least one voice output device for addressing the user, and
- the input device includes at least one voice input device for receiving the voice of the user.

The main idea of the present invention is the operating guide system for the bidirectional communication with the user, wherein the voice output device addresses the user. In particular, the operating guide system provides vocal information and instructions for the user. For example, said information and instructions relate to the appliance and its properties.

Preferably, the operating guide system is provided for teaching the user functions, applications and/or properties of the appliance, wherein preferably the operating guide system is provided for teaching the user during the first use of the appliance.

In particular, the voice input device includes at least one microphone.

Further, the output device may include at least one display for addressing the user by video and/or picture signals.

Moreover, the output device may include at least one speaker for addressing the user by acoustic signals.

Alternatively or additionally, the output device may include at least one vibration generator for addressing the user by mechanical vibrations.

Moreover, the output device may include at least one optical output device for addressing the user by optical signals. Further, present invention relates to a method for a bidirectional communication relating to an appliance, in particular for a domestic appliance, preferably for a kitchen appliance, between a user interface and a user, wherein said method comprises the steps of:
- activating the appliance by the user,
- starting an assistance program by the user interface or automatically,
- voice output of information according to the assistance program by the user interface, and
- manipulating the assistance program by inputs, preferably voice inputs, from the user.

In particular, the assistance program is adapted or adaptable for the first use of the appliance by the user. Preferably, the manual and/or automatic starting of the assistance program may be defined by a user profile.

Further, the method may be characterised by the steps of
- adjusting a detail level by the user, wherein said detail level defines the state of knowledge of the user, and
- adapting the assistance program according said detail level,
- wherein preferably the user can skip one or more parts of the assistance program, interrupt and/or finish said assistance program, or increase the level of detail.

Preferably, the assistance program and corresponding data are stored or storable in an external memory, preferably of a server or a data cloud, and downloaded or downloadable via the internet, and/or in an internal memory of the appliance and/or the user interface.

For example, the assistance program includes a unique appliance code depending on the type of appliance and a specific code depending on the individual appliance.

Alternatively or additionally, information according to the assistance program by the user interface may be output as a video by a display of the user interface.

Moreover, information according to the assistance program by the user interface may be output as mechanical vibrations by a vibration generator of the user interface. For example, a knob is vibrated, which needs to be pushed.

Further, information according to the assistance program by the user interface may be output as optical signal by an illumination unit of the user interface. For example, a knob is highlighted, which needs to be pushed.

At last, the method is performed by the operating guide system mentioned above.

Novel and inventive features of the present invention are set forth in the appended claims.

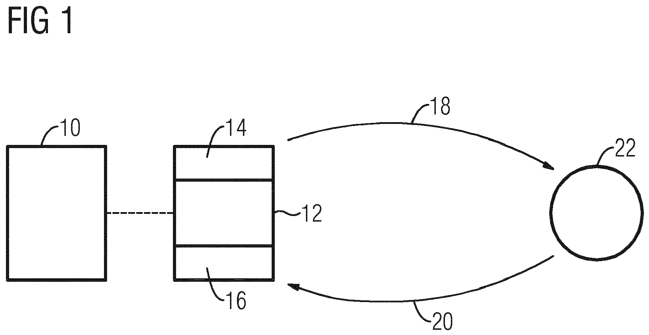

The present invention will be described in further detail with reference to the drawing, in which
- FIG 1: illustrates a schematic diagram of an operating guide system for an appliance according to a preferred embodiment of the present invention.

FIG 1 illustrates a schematic diagram of an operating guide system for an appliance 10 according to a preferred embodiment of the present invention. For example, the appliance 10 is a domestic appliance. The appliance 10 may be a kitchen appliance, in particular a cooking hob or cooking oven.

The operating guide system comprises a user interface 12 for a bidirectional communication with a user 22. The user interface 12 may be a separate part or integrated within the appliance 10. The user interface 12 includes an output device 14 and an input device 16. The output device 14 generates and sends an output signal 18 recognisable by the user 22. The input device 16 receives an input signal 20 from the user 22.

The user interface 12 may be a personal computer, notebook, tablet, smartphone, voice control device or the like. The user interface 12 is connected or connectable to an external storage, e.g. a server or data cloud, via a WIFI or internet connection. Modules for the operating guide system may be downloaded from the external storage at the choice of the user 22 and/or at the discretion of the manufacturer of the appliance 10.

The output signal 18 may be an acoustic, visual and/or vibrational signal and/or functional demonstration of the appliance 10. Moreover, the output device 14 may include a display for showing videos with the functional demonstration of the appliance 10. The input signal 20 may be an acoustic or visual signal.

In particular, the operating guide system is a vocal operating guide system, wherein the output signal 18 is a voice generated by the out device 14, while the input signal 20 is the voice of the user 22.

The operating guide system is provided for each appliance 10 specifically. Thus, only those features actually present in the specific bought appliance 10 are also present or accessible in the operating guide system.

For example, the operating guide system is provided by the manufacturer and stored in a suitable memory. Preferably, the operating guide system is stored in a memory of the user interface 12. Further the operating guide system may be stored in a cloud or server and provided and downloadable to the appliance 10 or the user interface 12 via the internet. Moreover, the operating guide system may be stored in an external voice control device.

The specific appliance 10 is specified by a unique appliance code. The vocal operating guide system is provided in dependence of said unique code and the specific feature combination of said appliance 10. The printed user manual can be minimised and reduced to the necessarily essential information. Preferably, the vocal operating guide system may provide a desired language. For example, the vocal operating guide system is stored on a server, while the appliance 10 comprises a communication module capable for the communication with said server. On identification of the specific appliance 10, the specific vocal operating guide system is provided.

Further, the appliance 10 may comprise interface means capable to communicate with the voice control device. The voice control device may be implemented in the appliance 10 or provided by an external voice control device, e.g. Google home or Alexa.

For a first time use of the appliance 10 by the user 22, the vocal operating guide system may comprise an introduction program comprising a first demonstration mode in which the appliance 10 demonstrates or guides the user 22 through the proper usage of its features.

For example, the appliance 10 is a cooking hob and comprises a cooking assistance program. Said cooking assistance program may introduce the workflow and/or input possibilities to the user 22. For instance, the cooking assistance program comprises usage of a food spit thermometer, e.g. a food probe, wherein the vocal operating guide system teaches the user 22 about the correct position of the food probe in a piece of food stuff. For example, if the food stuff is meat, then the tip of the food probe may not touch or be in contact with the bone. In subsequent steps, the type of meat, degree of cooking rare, medium or well done are set. Further, the vocal operating guide system additionally may be configured to wait for a confirmation action. In particular, said confirmation action is a speech signal of the user 22 at certain points. For example, if the vocal operating guide system has explained how to position the food spit, then it waits for the user 22 to confirm the action before further steps are explained.

Besides vocal explanation, the vocal operating guide system may be assisted by haptic, e.g. vibration, or visual, e.g. lighting up, signals. For example, the user interface 12 explains by lighting up or visualising several adjustments of said user interface 12. Also the vocal operating guide system may be accompanied by lightning of the cooking zone, in particular without any power supply to the heating elements. By this way, the functionality of the cooking hob may be explained, e.g. how a cooking zone, a bridge or the like is working, and/or how cooking parameters, like timer and/or power level can be adjusted or set.

Further, the vocal operating guide system may allow the user 22 to adjust a degree of details of said vocal operating guide system depending on the pre knowledge of the user 22. For example, the user 22 may add detail levels to get more detailed information about a specific feature, e.g. the positioning of the food sensor in the food stuff. Additionally or alternatively, the user 22 may adjust the degree of details to a level of less detail or even skip the explanation of a feature, if the user 22 already is familiar with.

For a first use of the appliance 10 by the user 22 the vocal operating guide system may be configured such that the vocal operating guide system is turned on initially after connection of the appliance 10 with a mains supply. For the first use the vocal operating guide system may be preconfigured by the manufacture. At first the vocal operating guide system may explain a pre-set combination of features, e.g. standard cooking procedures, timer and the vocal operating guide system itself. Then, the complete complexity of the appliance 10 may be presented to the user 22, if the user 22 does not intervene. However, the user 22 has the opportunity to interrupt, skip or adjust the detail level. Additionally or alternatively, as a first step the vocal operating guide system may ask the user 22 to adjust the level of detail and/or to select the features which shall be explained.

In one embodiment the first step of the vocal operating guide system comprises a step of explaining said vocal operating guide system and its function and possibilities to adjust and interact to the user 22. It is important that an interruption of power supply during the first time use of the vocal operating guide system will restart said vocal operating guide system for the first time use after a reconnection with power supply and/or continue at the position before the interruption. This has the advantage that, after such power cut of the appliance 10, it is secured that the appliance 10 is at least once introduced to the user 22 in a certain detail level specified by the user 22. If the vocal operating guide system for the first use is once completed, e.g. by running through completely or termination by the user 22, then said vocal operating guide system is not started anymore.

However, the vocal operating guide system can be reset or restarted by the user 22 manually, in particular by voice of the user 22. This is advantageous, if the appliance 10, the kitchen or the house is sold to another user 22 or another user not introduced wants to learn the use of the appliance 10, for example.

In general, the specific features of the appliance 10 may be explained by the vocal operating guide system on demand and selection of the user 22. The user 22 may input by voice or other means that a certain feature shall be explained. Additionally or alternatively, the vocal operating guide system may provide a selection menu asking the user 22 about the features to be explained and/or suggesting to the user 22 features to be explained. Said selection menu may be also provided vocally. The user 22 may adjust the detail level of the explanation and guide, preferably by voice command, again. The user 22 may select said feature by selection from a menu or voice input. For example, an item of said menu may be "explain timer". In addition, the appliance 10 will select an appropriate user guide module for the selected feature and start to explain the feature to the user 22.

According to a particular embodiment, the vocal operating guide system may assist the user 22 in real-time during a cooking process. The vocal operating guide system may guide the user 22 through a cooking process with voice commands. In addition, the cooking process may be further assisted by haptic feedback, e.g. vibration or visual feedback as lightning on user interface 12 and/or on the cooking zones. For example, the user 22 may be guided by voice to put a cookware item on a specific cooking zone which is concomitantly therewith lighting up. Accordingly, the user 22 may get a visual assistance of the selection of the cooking zone provided with a pre-set of cooking parameters, e.g. pre-adjustment of cooking power level and/or timer of the suggested cooking zone. However, also independent from the real-time assistance of a cooking program, the feedback of the appliance may comprise voice explanation as such, haptic feedback and assistance.

Furthermore, the operating guide system is capable to interact in real-time with the user 22. The operating guide system is adjustable by settings input by the user 22. The input device 16 may be able to recognise the user 22 by at least one implemented microphone. Further, a self-learning process within the operating guide system is possible, if the user 22 decides to skip some certain steps. If the user 22 has not interacted lately with the operating guide system, then said operating guide system may no longer bother him or will initiate contact with the user 22 and give suggestions. Based on the experience of the user 22, the operating guide system may be able to change its behaviour. Optionally, the input device 16 recognises different persons by voice, so that the operating guide system is capable to differentiate between certain profiles of users 22.

Cooking recipe suggestions as well as support provided during operation of the appliance 10 may increase the satisfaction of the user 22. Further, the support during operation of the appliance 10 may be a major contribution to the cooking experience of blind people. It is technically ensured that the appliance 10 is used in the correct way during the first use of said appliance 10. Additionally, a multimedia show for the user 22 is possible.

The operating guide system may reduce calls to the customer support centre by the user 22. Further, the operating guide system may reduce health risks for the user 22. In contrast, a big manual in paper form is no longer necessary. Thus, the weight of transport is reduced which supports the protection of the environment. The missing manual in paper form leads to less emissions during transport and less use of cellulose.

The multiple connections of kitchen appliances 10 allow the introduction of kitchen modes. Based on preference of the user 22 the kitchen mode is set for a group of appliances 10 or a single appliance 10, wherein said appliance(s) 10 may alter the state of operation. For example, in a holiday mode a refrigerator may operate on a lower power setting and the cooking oven may shut down its user interface. Both options reduce energy consumption. The term kitchen modes represent different settings for the single appliance 10 or the group of appliances 10 located in the kitchen. For example, the refrigerator operates on low power during the holiday kitchen mode.

Since a high alert setting would increase the frequency of asked feedbacks by the user 22 of the appliance 10 and would turn on the lights of the hood, cooking hob and/or cooking oven. A great variety of settings and their effects are possible and the given points should serve only as examples rather than limits. The advantages of the kitchen modes are always the increase of user satisfaction and the decrease of energy consumption.

The following example shows the explanation and guidance on assisted cooking functions and recipes for a cooking hob:
- selection of a first level of the food type, e.g. beef, chicken, pork, lamb, etc.,
- optional selection of a second level of the food type, e.g. breast, escalope, legs, etc.,
- selection of the cooking process, e.g. sous vide, fry, poach, boil, simmer, reheat, warm-up, etc.,
- optional selection of the thickness of meat, e.g. 2 cm, 4 cm, 6 cm, etc.,
- suggestion of the temperature value detected by the food sensor, which is suggested, but adjustable,
- optional suggestion of then timer value, which is adjustable,
- optional selection of the pro fry level (if c) is fry) (LOW, MED, HIGH).

The operating guide system may ask for parameters, e.g. cooking temperature, cooking time and/or thickness of the food stuff, subsequently input by the user. Further, the operating guide system may propose values for the parameters, wherein said values are subsequently confirmed or corrected by the user. The cooking recipe may be created interactively.

The following example shows the explanation and guidance on appliance functions:
- control of hood dependent parameters of the cooking hob and vice versa, wherein preferably the "after time" and "level" of the hood may be adjusted,
- cooking zones and bridging functionalities depending on pot detection,
- timer setting depending on the cooking zones and/or the pot detection.

Although an illustrative embodiment of the present invention has been described herein with reference to the accompanying drawings, it is to be understood that the present invention is not limited to that precise embodiment, and that various other changes and modifications may be affected therein by one skilled in the art without departing from the scope or spirit of the invention. All such changes and modifications are intended to be included within the scope of the invention as defined by the appended claims.

### List of reference numerals

- 10: appliance
- 12: user interface
- 14: output device
- 16: input device
- 18: output signal
- 20: input signal
- 22: user

## Claims

1. An operating guide system for an appliance (10), in particular for a domestic appliance, preferably for a kitchen appliance, wherein:
- the operating guide system comprises at least one user interface (12) for a bidirectional communication with a user (22),
- the user interface (12) is a separate device or an integrated part of the appliance (10),
- the user interface (12) includes at least one output device (14) and at least one input device (16),
- the output device (14) includes at least one voice output device for addressing the user (22), and
- the input device (14) includes at least one voice input device for receiving the voice of the user (22).

2. The operating guide system according to claim 1,
**characterised in that**
the operating guide system is provided for teaching the user (22) functions, applications and/or properties of the appliance (10), wherein preferably the operating guide system is provided for teaching the user (22) during the first use of the appliance (10).

3. The operating guide system according to claim 1 or 2,
**characterised in that**
the voice input device includes at least one microphone.

4. The operating guide system according to any one of the preceding claims,
**characterised in that**
the output device (14) includes at least one display for addressing the user (22) by video and/or picture signals and/or at least one speaker for addressing the user by acoustic signals.

5. The operating guide system according to any one of the preceding claims,
**characterised in that**
the output device (14) includes at least one vibration generator for addressing the user (22) by mechanical vibrations.

6. The operating guide system according to any one of the preceding claims,
**characterised in that**
the output device (14) includes at least one optical output device for addressing the user (22) by optical signals.

7. A method for performing a bidirectional communication relating to an appliance (10), in particular for a domestic appliance, preferably for a kitchen appliance, between a user interface (12) and a user (22), wherein said method comprises the steps of:
- activating the appliance (10) by the user (22),
- starting an assistance program by the user interface (12) or automatically,
- voice output of information according to the assistance program by the user interface (12), and
- manipulating the assistance program by inputs, preferably voice inputs, from the user (22).

8. The method according to claim 7,
**characterised in that**
the assistance program is adapted or adaptable for the first use of the appliance (10) by the user (22), wherein preferably the manual and/or automatic start of the assistance program is defined by a user profile.

9. The method according to claim 7 or 8,
**characterised by** the steps of
- adjusting a detail level by the user (22), wherein said detail level defines the state of knowledge of the user (22), and
- adapting the assistance program according to the detail level,
- wherein preferably the user (22) can skip one or more parts of the assistance program, interrupt and/or finish said assistance program, or increase the level of detail.

10. The method according to any one of the claims 7 to 9,
**characterised in that**
the assistance program and corresponding data are stored or storable in an external memory, preferably of a server or a data cloud, and downloaded or downloadable via the internet, and/or in an internal memory of the appliance (10) and/or the user interface (12).

11. The method according to any one of the claims 7 to 10,
**characterised in that**
the assistance program includes a unique appliance code depending on the type of appliance (10) and a specific code depending on the individual appliance (10).

12. The method according to any one of the claims 7 to 11,
**characterised in that**
information according to the assistance program by the user interface (12) is output as a video by a display of the user interface (12).

13. The method according to any one of the claims 7 to 12,
**characterised in that**
information according to the assistance program by the user interface (12) is output as mechanical vibrations by a vibration generator of the user interface (12).

14. The method according to any one of the claims 7 to 13,
**characterised in that**
information according to the assistance program by the user interface (12) is output as optical signal by an illumination unit of the user interface (12).

15. The method according to any one of the claims 7 to 14,
**characterised in that**
the method is performed by the operating guide system according to any one of the claims 7 to 14.
